# EUROPÄISCHE PATENTSCHRIFT

(11) **EP 2 956 665 B1**
(45) Veröffentlichungstag und Bekanntmachung des Hinweises auf die Patenterteilung: **31.10.2018**
(21) Anmeldenummer: 14711451.6
(22) Anmeldetag: 11.02.2014
(51) Int. Cl.: F03D 13/20

(54) **VERFAHREN ZUM TRANSPORT EINES ODER MEHRERER WINDKRAFTANLAGENTÜRME UND WINDKRAFTANLAGENTURM**
METHOD FOR TRANSPORTING ONE OR MORE WIND-TURBINE TOWERS, AND WIND-TURBINE TOWER
PROCÉDÉ DE TRANSPORT D'UN OU DE PLUSIEURS MÂTS D'ÉOLIENNES ET MÂT D'ÉOLIENNE

(30) Priorität: 13.02.2013 DE 102013101387
(43) Veröffentlichungstag der Anmeldung: 23.12.2015
(73) Patentinhaber: 2-B Energy Holding B.V., 7556 PE Hengelo (NL)
(72) Erfinder: JAKOBSSON, Johan Mikael, Grants Pass, Oregon 97527 (US); PEELS, Huibertus, NL-7631 HS Ootmarsum (NL)
(74) Vertreter: Bossmeyer, Jörg Peter
(86) Internationale Anmeldenummer: PCT/EP2014/052580
(87) Internationale Veröffentlichungsnummer: WO 2014/124911

(56) Entgegenhaltungen:
- WO-A1-2008/152101
- WO-A2-2006/101632
- WO-A2-2012/159046
- US-A1- 2012 045 345
- US-B1- 7 574 832

## Beschreibung

Die Erfindung betrifft ein Verfahren zum Transport eines oder mehrerer Windkraftanlagentürme, wobei der Turm oder jeder der Türme als Gittermast ausgebildet ist und aus mehreren Turmsegmenten besteht, die ein Fußsegment und ein Kopfsegment umfassen.

Windkraftanlagen sind in den unterschiedlichsten Ausführungen bekannt, weisen jedoch grundsätzlich einen ähnlichen Aufbau auf. Nur beispielhaft wird daher in diesem Zusammenhang auf die WO 2005/028781 A2, die DE 10 2007 006 652 A1, die US 2012/0045345 oder die WO 2008/088408 A2 verwiesen, aus denen jeweils Windkraftanlagen mit einem Turm und einem den oberen Abschluss des Turmes bildenden Maschinenkopf zur Anbringung des Rotors der Windkraftanlage hervorgehen. In dem Maschinenkopf befinden sich in an sich bekannter Weise Generatoren, Getriebe, Aggregate, Schaltanlagen, Komponenten, also im weiteren Sinne Maschinen und Geräte, die für den Betrieb der Windkraftanlage erforderlich sind. Windkraftanlagen, die auf offener See aufgestellt werden und die man allgemein als " Offshore-Windkraftanlagen" bezeichnet, stellen die Techniker und Ingenieure vor erhebliche Schwierigkeiten, da derartige Windkraftanlagen in der Regel vor Ort montiert werden müssen, was unter den zum Teil schwierigen Witterungsbedingungen eine nicht ungefährliche, aufwändige und damit kostenintensive Aufgabe darstellt. Bei dieser speziellen Art der Windkraftanlagen ist die Montage von Schiffen aus nur sehr eingeschränkt möglich, weshalb hier häufig Hubschrauber zum Einsatz kommen müssen. Aus diesem Grund geht die Tendenz dahin, die einzelnen Elemente der Windkraftanlage vorab zu fertigen und sie dann zum Einsatz- oder Aufstellungsort zu bringen, wo sie lediglich montiert, also miteinander verbunden werden müssen. Eine derartige Vorfertigung hat jedoch den Nachteil, dass sich der Transport der zum Teil erhebliche Dimensionen aufweisenden Bauteile schwierig gestaltet. So sind bislang mit einem einzelnen Schiffstransport auch nur einzelne Anlagenteile transportierbar.

Der Transport auf Straßen wird bei einigen Ausführungen auf dem Festland aufstellbarer Windkraftanlagen dadurch verbessert, dass der Turm der Windkraftanlage beispielsweise teleskopierbar ausgeführt ist, wie dies nur beispielhaft aus der WO 2005/028781 A1 hervorgeht. Die Teleskopierbarkeit des Turmes erfordert jedoch zusätzliche, aufwändige technische Maßnahmen und spezielle Abdichtungen an den ineinander eingesetzten Turmsegmenten.

Eine andere Lösung beschreibt die EP 1 851 401 B1, nach der der Turm der Windkraftanlage in mehrere Segmente zerlegt wird, deren jeweils konische Gestaltung dazu genutzt werden kann, sie während des Transportes ineinander einzusetzen. Auf diese Weise ist eine Platzersparnis möglich. Der Turm weist jedoch bei diesem Beispiel eine in sich geschlossene Mantelfläche auf, und ist wegen der dadurch gegebenen Wind- beziehungsweise Wasserangriffsfläche für den Betrieb auf offener See (Offshore) weniger geeignet. Auch der Transport und die Montage eines derartigen Turmes gestaltet sich beispielsweise wegen des damit verbundenen Gewichts schwierig.

Generell sind natürlich auch Türme bekannt, die als Gittermast ausgeführt sind. Ein Beispiel hierfür gibt die US 5,490,364. Der in der Druckschrift beschriebene Turm besteht aus mehreren Segmenten, die von einem Fußsegment ausgehend von innen her nach oben befördert und anschließend jeweils auf dem darunter befindlichen Segment befestigt werden. Dieser Turm wird bei der Gasförderung für die Aufstellung auf dem Festland zum Einsatz gebracht.

Der Erfindung liegt die Aufgabe zugrunde, ein Verfahren zum Transport eines oder mehrerer Windkraftanlagentürme, vorzugsweise auf dem Seeweg, bereitzustellen, das möglichst effektiv und platzsparend ausfällt. Darüber hinaus ist insbesondere ein Windkraftanlagenturm bereitzustellen, der nach diesem Verfahren transportiert werden kann und der einfach aufgebaut und für die Besonderheiten des Betriebs auf hoher See geeignet ist.

Diese Aufgabe wird erfindungsgemäß mit einem Verfahren nach Anspruch 1 gelöst. Bevorzugte Weiterbildungen der Erfindung sind in den Unteransprüchen und in der nachfolgenden Beschreibung gegeben.

Ein Verfahren zum Transport eines oder mehrerer Windkraftanlagentürme, insbesondere auf dem Seeweg, wobei der Turm oder jeder der Türme als Gittermast ausgebildet ist und aus mehreren Turmsegmenten besteht, die ein Fußsegment und ein Kopfsegment umfassen, wird erfindungsgemäß dahin weitergebildet, dass die vorab gefertigten Turmsegmente des oder jedes Turmes zum Transport derart ineinander angeordnet und/oder ineinander eingesetzt werden, dass jeweils ein nach der Endmontage des oder jedes Turmes höher gelegenes Turmsegment in einem nach der Endmontage des Turmes darunter angeordneten Turmsegment angeordnet und/oder eingesetzt ist und der oder die auf diese Weise geschachtelten Türme insgesamt stehend auf einem Schiff transportiert werden. Das Fußsegment des oder jedes Turmes ist insbesondere ein Fundamentsegment.

Mit dem erfindungsgemäßen Verfahren werden gleich mehrere, sehr wesentliche Vorteile umgesetzt. So ist einerseits die Ausführung des oder jedes Turmes als Gittermast insbesondere beim Betrieb einer Windkraftanlage auf hoher See sowie während des Transports der Turmsegmente hilfreich, weil derartige Türme ein relativ geringes Eigengewicht bei hoher Stabilität aufweisen. Zudem ist der Wind- und/oder Wasserwiderstand von Gittermasten sehr gering, was sich ebenfalls positiv auf die Transporteigenschaften der Turmsegmente und auf ihren speziellen Einsatzzweck auswirkt.

Die Schachtelung der einzelnen Turmsegmente des oder jedes Turmes ineinander sowie der stehende Transport an Bord eines Schiffes ermöglichen andererseits jeweils für sich genommen eine extreme Platzeinsparung, sodass mit einem einzigen Schiffstransport sogar mehrere Türme verschiedener Windkraftanlagen gleichzeitig transportiert werden können. Dies war bislang überhaupt nicht möglich. Dabei sind die Türme während des Transports insbesondere geschachtelt, d.h., dass die Turmsegmente jedes Turms insbesondere ineinander geschachtelt, d.h. ineinander angeordnet und/oder ineinander eingesetzt, sind.

Ein weiterer Vorzug des Verfahrens nach der Erfindung ist auch darin zu sehen, dass sich die ineinander geschachtelten Turmsegmente des oder jedes Turmes während des Transportes gegenseitig stützen. Anders ausgedrückt, die Turmsegmente des oder jedes Turmes können sich während des Transportes gegenseitig stützen.

Das ineinander Anordnen und/oder ineinander Einsetzen der Turmsegmente des oder jedes Turmes erfolgt bevorzugt derart, dass jeweils ein nach der Endmontage des oder jedes Turmes tiefer gelegenes Turmsegment über ein nach der Endmontage des Turmes darüber angeordnetes Turmsegment gestülpt wird.

Gemäß einer Weiterbildung wird, vorzugsweise nur oder zunächst nur, eines der Turmsegmente des oder jedes, insbesondere geschachtelten oder zu schachtelnden, Turmes an dem Schiff (oder Schiffsdeck) festgelegt, sodass das oder die zugehörigen anderen Turmsegmente insbesondere an dem einen Turmsegment gestützt werden. Ist ein größerer Abstand zwischen den Turmsegmenten und/oder Flanschen der Turmsegmente vorhanden, so kann dieser Abstand für das Stützen ungünstig sein. Vorteilhaft werden nach dem Festlegen des einen Turmsegments des oder jedes, insbesondere geschachtelten, Turmes das oder die zugehörigen anderen Turmsegmente relativ zu dem einen Turmsegment und/oder zueinander gedreht, bis zwischen den Turmsegmenten des oder jedes, insbesondere geschachtelten, Turmes ein geeigneter und/oder optimaler Abstand zum Stützen erreicht ist. Anschließend werden das oder die zugehörigen anderen Turmsegmente bevorzugt an dem Schiff (oder Schiffsdeck) festgelegt, was vorzugsweise mit geringerem Aufwand erfolgt als das Festlegen des einen Turmsegments. Das eine Turmsegment ist z.B. ein inneres oder das innerste Turmsegment, sodass das oder die zugehörigen anderen Turmsegmente insbesondere das oder die zugehörigen äußeren Turmsegmente sind. Alternativ ist das eine Turmsegment z.B. ein äußeres oder das äußerste Turmsegment, sodass das oder die zugehörigen anderen Turmsegmente insbesondere das oder die zugehörigen inneren Turmsegmente sind.

Beispielsweise wird, vorzugsweise nur oder zunächst nur, ein inneres oder das innerste der Turmsegmente des oder jedes, insbesondere geschachtelten oder zu schachtelnden, Turmes an dem Schiff (oder Schiffsdeck) festgelegt, sodass das oder die zugehörigen äußeren Turmsegmente insbesondere an dem inneren oder innersten Turmsegment gestützt werden. Das oder die zugehörigen äußeren Turmsegmente können anschließend, z.B. mit einem geringeren Aufwand, an dem Schiff (oder Schiffsdeck) festgelegt werden. Der Aufwand zum Festlegen des äußeren Turmsegmentes oder der äußeren Turmsegmente kann somit reduziert werden. Alternativ wird z.B., vorzugsweise nur oder zunächst nur, ein äußeres oder das äußerste der Turmsegmente des oder jedes, insbesondere geschachtelten oder zu schachtelnden, Turmes an dem Schiff (oder Schiffsdeck) festgelegt, sodass das oder die zugehörigen inneren Turmsegmente insbesondere an dem äußeren oder an dem äußersten Turmsegment gestützt werden. Das oder die zugehörigen inneren Turmsegmente können anschließend, z.B. mit einem geringeren Aufwand, an dem Schiff (oder Schiffsdeck) festgelegt werden. Der Aufwand zum Festlegen des inneren Turmsegmentes oder der inneren Turmsegmente kann somit reduziert werden. Auch hierdurch ergibt sich eine wesentliche Transportvereinfachung.

Das innere oder innerste Turmsegment des oder jedes, insbesondere geschachtelten oder zu schachtelnden, Turmes bildet insbesondere dessen Kopfsegment. Das äußere oder äußerste Turmsegment des oder jedes, insbesondere geschachtelten oder zu schachtelnden, Turmes bildet insbesondere dessen Fußsegment.

Gemäß einer Ausgestaltung des Verfahrens wird vorgeschlagen, dass die Turmsegmente des oder jedes Turmes wenigstens ein Zwischensegment umfassen, welches, insbesondere zum Transport, zwischen dem Kopfsegment und dem Fußsegment angeordnet ist oder wird, sodass auf diese Weise vorteilhaft der oder die Türme in beliebiger Weise, insbesondere höhenvariabel, gestaltet werden können. Bevorzugt umfassen die Turmsegmente des oder jedes Turmes ein oder mehrere Zwischensegmente, das oder die, insbesondere zum Transport, zwischen dem Kopfsegment und dem Fußsegment angeordnet ist oder wird oder sind oder werden.

Eine Weiterbildung der Erfindung ist darüber hinaus darin zu sehen, dass der oder jeder Turm einen polygonalen oder dreieckförmigen Querschnitt aufweist.

Diese Lösung führt unter anderem auch dazu, dass bevorzugt die einen polygonalen oder dreieckförmigen Querschnitt aufweisenden Türme gleichzeitig, insbesondere jeweils mit ihren Seiten aneinander ausgerichtet und/oder aneinander anliegend, auf dem Schiff transportiert werden oder werden können. Eine derartige, dicht nebeneinander stehende Anordnung der Türme, die bevorzugt mit einem teilweisen Berührungskontakt erfolgt, ist ebenfalls platzsparend und insbesondere nicht bei Türmen mit einem kreisrunden Querschnitt möglich. Der Transport zahlreicher Türme im Rahmen einer einzelnen Schiffsfracht spart dabei Transportzeit sowie Transportkosten und leistet somit letztlich auch einen wesentlichen Beitrag zum Umweltschutz, da sich aufgrund der genannten Einsparungen natürlich auch der Kraftstoffverbrauch für den Betrieb der Schiffe reduziert. Der wesentliche Vorteil der Ausführung der Türme mit einem polygonalen oder dreieckigen Querschnitt besteht ferner darin, dass sich deren Turmsegmente während des ineinander geschachtelten Transports nicht oder lediglich geringfügig gegeneinander verdrehen und somit nicht in unerwünschter Weise verkeilen können. Der polygonale Querschnitt ist z.B. ein viereckiger Querschnitt.

Der Transport der Türme auf einem Schiff ist wegen der auf hoher See herrschenden Witterungsbedingungen nicht immer mit Sicherheit prognostizierbar. Daher kann es vorkommen, dass ein derartiger Schiffstransport in ein Unwetter oder einen Sturm gerät. In einem solchen Fall ist es von entscheidender Bedeutung für die Sicherheit der Schiffsbesatzung und der Ladung beziehungsweise des Schiffes, dass die Ladung ausreichend gesichert wird. Dies stellt bei aufrecht stehenden Türmen eine besondere Herausforderung dar. Aus diesem Grund geht eine Weiterbildung der Erfindung dahin, dass die einzelnen Turmsegmente des oder jedes Turmes gegeneinander gesichert transportiert werden und auf oder in dem Schiff mit Hilfe einer Fixierungseinrichtung fixiert sind. Durch die Sicherung der Turmsegmente untereinander und die zusätzliche Verwendung einer Fixierungseinrichtung am Schiff wird folglich eine größtmögliche Sicherheit des Transportes gewährleistet.

Bevorzugt wird der oder jeder Turm mittels des Schiffes zu einem Einsatz- oder Aufstellungsort transportiert und dort montiert. Die Montage des oder jedes Turms erfolgt insbesondere derart, dass seine Turmsegmente nacheinander von außen nach innen vom Schiff abgehoben und, insbesondere an seinem Einsatz- oder Aufstellungsort, zu dem Gittermast montiert werden. Zuerst wird insbesondere das Fußsegment vom Schiff abgehoben und bevorzugt im Boden oder Meeresboden verankert. Vorzugsweise wird das Fußsegment mittels eines Fundaments oder einer Gründung im Boden oder Meeresboden verankert. Das Fundament oder die Gründung können zusätzlich zum Fußsegment vorgesehen sein. Das Fußsegment kann aber auch das Fundament oder die Gründung oder einen Teil des Fundaments oder der Gründung bilden. Ist das Zwischensegment vorhanden, so wird dieses insbesondere vom Schiff abgehoben und auf das Fußsegment aufgesetzt. Sind mehrere Zwischensegmente vorhanden, so wird insbesondere zunächst das äußere oder äußerste Zwischensegment vom Schiff abgehoben und auf das Fußsegment aufgesetzt. Danach wird jedes weitere Zwischensegment vom Schiff abgehoben und auf das zuvor abgehobene Zwischensegment aufgesetzt. Zuletzt wird insbesondere das Kopfsegment vom Schiff abgehoben und bevorzugt auf das zuvor abgehobene Turmsegment aufgesetzt, welches insbesondere das Fußsegment oder das oder eines der Zwischensegmente ist. Das Abheben oder Heben der Turmsegmente erfolgt insbesondere mittels eines Hebewerkzeugs, welches beispielsweise auf dem Schiff angeordnet ist. Alternativ kann das Hebewerkzeug aber auch außerhalb des Schiffes, beispielsweise auf einem anderen Schiff, angeordnet sein. Das Hebewerkzeug ist vorzugsweise als Kran ausgebildet. Es ist aber auch möglich, als Hebewerkzeug einen Hubschrauber zu nutzen. Das erfindungsgemäße Verfahren kann insbesondere auch als Verfahren zum Transport und zur Montage eines oder mehrerer Windkraftanlagentürme bezeichnet werden.

Gemäß einer Weiterbildung wird auf dem Schiff für den Turm oder je Turm ein Maschinenkopf mitgeführt. Nach dem Aufeinandersetzen der Turmsegmente des oder jedes Turmes wird insbesondere der zugehörige Maschinenkopf vom Schiff abgehoben und auf das zugehörige Kopfsegment aufgesetzt. Bevorzugt umfasst dabei der oder jeder Maschinenkopf bereits einen Windkraftanlagenrotor, der insbesondere mehrere, vorzugsweise zwei, Rotorblätter aufweist und insbesondere durch Wind antreibbar ist.

Vorteilhaft an der Montage ist, dass gegenüber dem Stand der Technik weniger Hebeschritte erforderlich sind. Ist z.B. kein Zwischensegment vorhanden, sind für die Montage des oder jedes Turmes einschließlich Maschinenkopf und Rotor lediglich drei Hebungen erforderlich. Auch werden die Turmsegmente und Maschinenköpfe mit Rotor mittels desselben Hebewerkzeugs gehoben, sodass kein Werkzeugwechsel erforderlich ist. Ferner lässt sich die Lage eines angehobenen Maschinenkopfes mit Rotor durch Halteseile kontrollieren, sodass ein Heben des Maschinenkopfes auch bei höheren Windgeschwindigkeiten möglich ist. Das Wetterfenster für die Montage ist somit relativ groß.

Im montierten Zustand des oder jedes Turms, d.h. nach seiner Endmontage, sind seine Turmsegmente insbesondere übereinander angeordnet, vorzugsweise aufeinander gesetzt, wobei das Fußsegment das unterste der Turmsegmente und das Kopfsegment das oberste der Turmsegmente bildet. Sind das oder die Zwischensegmente vorhanden, so sind das oder die Zwischensegmente insbesondere über dem Fußsegment und unter dem Kopfsegment angeordnet.

Bevorzugt weist der oder jeder Windkraftanlagenturm, insbesondere im montierten Zustand, eine sich zu seiner Oberseite hin verjüngende Querschnittsgeometrie auf. Vorzugsweise weist jedes Turmsegment eine sich zu seiner Oberseite hin verjüngende Querschnittsgeometrie auf.

Ein Windkraftanlagenturm zum Transport nach dem vorstehend beschriebenen Verfahren ist dadurch weitergebildet, dass der Turm aus mehreren Turmsegmenten besteht, die ein Fußsegment und ein Kopfsegment umfassen, als ein Gittermast ausgebildet ist und eine sich zu seiner Oberseite hin verjüngende Querschnittsgeometrie aufweist. Das Fußsegment des Turmes ist insbesondere ein Fundamentsegment. Bevorzugt weist jedes Turmsegment eine sich zu seiner Oberseite hin verjüngende Querschnittsgeometrie auf.

Durch die sich verjüngende Querschnittsgeometrie besteht die Möglichkeit, die Turmsegmente ineinander zu schachteln. Dabei werden mit einfachen Worten ausgedrückt die jeweils kleineren Turmsegmente in den Hohlraum der jeweils größeren Turmsegmente des Turmes der Windkraftanlage eingeführt oder eingesetzt, um auf diese Weise ihren Transport zu ermöglichen. Der erfindungsgemäße Windkraftanlagenturm kann gemäß allen im Zusammenhang mit dem erfindungsgemäßen Verfahren erläuterten Ausgestaltungen weitergebildet sein. Ferner kann das erfindungsgemäße Verfahren gemäß allen im Zusammenhang mit dem erfindungsgemäßen Windkraftanlagenturm erläuterten Ausgestaltungen weitergebildet sein.

Bevorzugt umfassen die Turmsegmente wenigstens ein Zwischensegment, das zwischen dem Fußsegment und dem Kopfsegment angeordnet ist, was insbesondere zu einer sehr flexiblen Ausführung des Turmes hinsichtlich seiner umsetzbaren Höhe führt. Vorteilhaft umfassen die Turmsegmente ein oder mehrere Zwischensegmente, das oder die zwischen dem Fußsegment und dem Kopfsegment angeordnet ist oder sind.

Die Turmsegmente sind insbesondere übereinander angeordnet, vorzugsweise aufeinander gesetzt, wobei das Fußsegment das unterste der Turmsegmente und das Kopfsegment das oberste der Turmsegmente bildet. Sind das oder die Zwischensegmente vorhanden, so sind das oder die Zwischensegmente insbesondere über dem Fußsegment und unter dem Kopfsegment angeordnet.

Eine bevorzugte Ausführungsvariante der Turmsegmente besteht darin, dass diese eine polygonale, insbesondere eine viereckige oder dreieckige Querschnittsgeometrie aufweisen. Dies hat im Hinblick auf die dreieckige Querschnittsgeometrie insbesondere den Vorteil, dass die Türme der, vorzugsweise für den Betrieb auf hoher See (offshore) vorgesehenen, Windkraftanlagen mit einer ihrer spitzen Seiten entgegen der Hauptwetterrichtung und/oder Hauptwindrichtung ausgerichtet werden können, sodass ihre Geometrie beispielsweise analog einem Schiffsbug gestaltet ist. Insbesondere ist oder wird der Windkraftanlagenturm, vorzugsweise mit seinem Fußsegment, im Boden oder Meeresboden verankert. Auftreffende Wellen und auftreffender Wind werden somit auf natürliche Weise gebrochen und der Turm bietet dieser angreifenden Kraft folglich neben seiner Gitterstruktur und dem damit reduzierten Querschnitt auch auf diese Weise eine minimale Angriffsfläche. Diese Maßnahme erhöht daher die Lebensdauer der gesamten Windkraftanlage, da sie insgesamt geringeren Belastungen ausgesetzt ist.

Vorzugsweise ist oder wird das Fußsegment mittels eines Fundaments oder einer Gründung im Boden oder Meeresboden verankert. Das Fundament oder die Gründung können zusätzlich zum Fußsegment vorgesehen sein. Das Fußsegment kann aber auch das Fundament oder die Gründung oder einen Teil des Fundaments oder der Gründung bilden.

Wie eingangs bereits ausgeführt wurde, handelt es sich bei den Turmsegmenten nach der Erfindung um weitgehend komplett vorgefertigte Baugruppen, die an ihrem Einsatz- oder Aufstellungsort lediglich miteinander verbunden werden müssen. Zur Erleichterung der Montage ist es daher von Vorteil, wenn der Turm an der Oberseite seines Fußsegmentes sowie, sofern vorhanden, an der Oberseite des oder jedes seiner Zwischensegmente, Anschlussflansche aufweist, die passgenau korrespondierend zu Flanschen an der Unterseite der darauf aufsetzbaren oder aufgesetzten Turmsegmente ausgeführt sind.

Bevorzugt werden dabei die Anschlussflansche und die Flansche jeweils an den Eckpunkten der polygonalen oder dreieckigen Querschnittsgeometrie der Turmsegmente angeordnet, um auf diese Weise eine sichere Verbindung der Turmsegmente bei ihrer Montage zu einem Turm der Windkraftanlage zu gewährleisten.

Entsprechend einer speziellen Ausgestaltung der Erfindung wird darüber hinaus vorgeschlagen, dass das Kopfsegment an seiner Oberseite bereits eine Anschlussgeometrie zur Verbindung mit einem Maschinenkopf der Windkraftanlage aufweist. Folglich muss auch das Kopfsegment nicht erst vor Ort montiert werden, sondern stellt insbesondere eine fertig montierte Baugruppe dar. Ist der Turm abschließend zusammengebaut, muss lediglich der Maschinenkopf aufgesetzt werden, um letztlich z.B. die Rotorblätter anzusetzen. Bevorzugt wird der Maschinenkopf aber zusammen mit dem Rotor auf den Maschinenkopf aufgesetzt. Die gesamte Windkraftanlage kann auf diese Weise mit wesentlich weniger Arbeitsschritten und daher in wesentlich kürzerer Zeit erzeugt werden, als dies bei bekannten Ausführungen der Fall ist.

Windkraftanlagen moderner Bauart werden aus den unterschiedlichsten Werkstoffen oder Werkstoffkomponenten erzeugt. So sind Holzvarianten ebenso wie Kunststoffausführungen bekannt. Für die hier vorliegende Erfindung hat sich jedoch eine Ausführung des Turmes als Stahlkonstruktion besonders bewährt. Stahl hat dabei nicht nur die erforderliche Elastizität, sondern auch die notwendige Festigkeit beziehungsweise Lebensdauer, um mit möglichst geringem Materialeinsatz eine ausreichende Sicherheit zu gewährleisten. Darüber hinaus lässt sich Stahl insgesamt einfach und technisch hochwertig verarbeiten.

Die Erfindung betrifft ferner die Verwendung eines oder mehrerer Windkraftanlagentürme zur Durchführung des erfindungsgemäßen Verfahrens. Diese Verwendung kann gemäß allen im Zusammenhang mit dem Windkraftanlagenturm und/oder mit dem erfindungsgemäßen Verfahren erläuterten Ausgestaltungen weitergebildet sein.

Die Erfindung wird nachfolgend anhand eines bevorzugten Ausführungsbeispiels unter Bezugnahme auf die Zeichnung beschrieben. Das gezeigte Ausführungsbeispiel ist dabei nicht einschränkend zu verstehen, sondern dient der anschaulichen Erläuterung.

Gleiche oder gleichartige Bauteile werden stets mit denselben Bezugszeichen bezeichnet. Insbesondere sind in den Figuren lediglich vereinfachte Prinzipdarstellungen gezeigt, sodass es möglich ist, dass ein oder mehrere Bauteile oder Merkmale nicht dargestellt sind. Dies bedeutet jedoch nicht, dass derartige Bauteile oder Merkmale nicht vorhanden sein können.

In der Zeichnung zeigen:
Figur 1 eine perspektivische Ansicht dreier, ineinander eingesetzter Turmsegmente eines Windkraftanlagenturms,
Figur 2 die Turmsegmente aus Figur 1 in einer Seitenansicht und mit einer Fixierungseinrichtung und
Figur 3 ein Beispiel für die Möglichkeit des Transports mehrerer Windkraftanlagentürme auf einem Schiff.

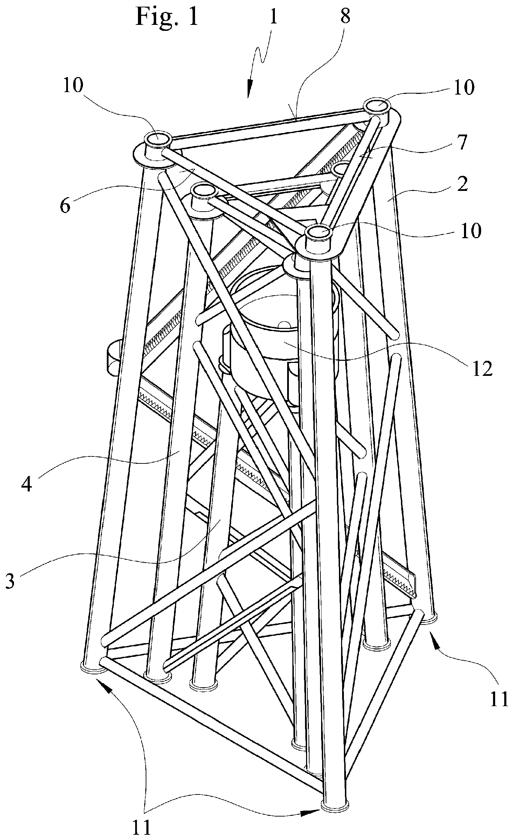

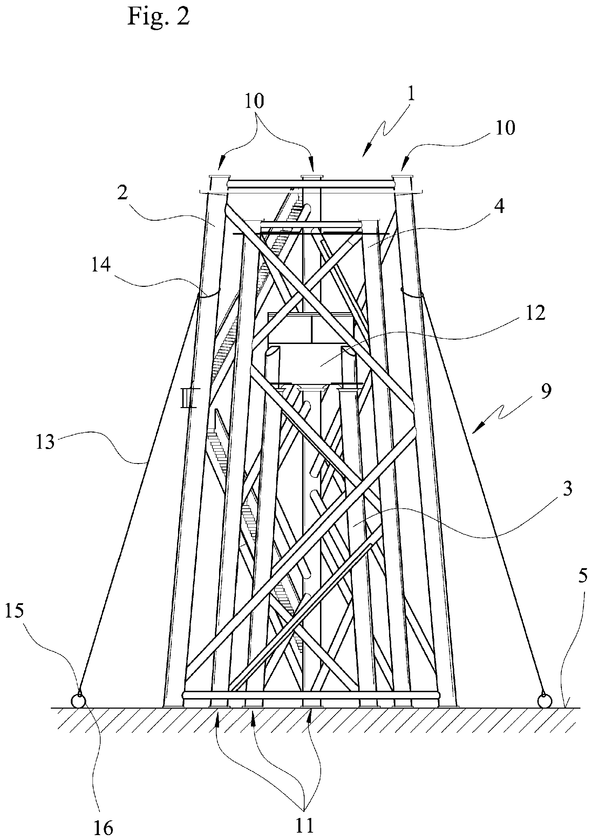

Die Figur 1 zeigt in perspektivischer Ansicht drei ineinander geschachtelt angeordnete Turmsegmente eines Windkraftanlagenturmes 1, bei denen es sich um ein Fußsegment 2, ein Zwischensegment 4 sowie ein Kopfsegment 3 handelt. In der dargestellten Form können die Turmsegmente 2, 3, 4 stehend auf einem Schiff 5 transportiert werden, was eine besonders platzsparende Transportmöglichkeit darstellt und mehr im Detail aus der Darstellung in Figur 2 hervorgeht. Jedes der in diesem Fall mit einer dreieckförmigen Querschnittsgeometrie versehenen Turmsegmente 2, 3, 4 weist folglich drei Seiten 6, 7, 8 auf. An der Oberseite des Fußsegmentes 2 sowie an der Oberseite des Zwischensegmentes 4 sind jeweils Anschlussflansche 10 an jedem der Eckpunkte der dreieckigen Querschnittsgeometrie der Turmsegmente 2, 4 angeordnet. Diese Anschlussflansche 10 korrespondieren mit hierzu an der jeweiligen Unterseite des Kopfsegmentes 3 sowie des Zwischensegmentes 4 vorhandenen Flanschen 11. Durch die Verbindung der Anschlussflansche 10 und der Flansche 11 kann der Turm aus den einzelnen Turmsegmenten 6, 7, 8 zusammengebaut werden. Das Kopfsegment 3 weist darüber hinaus die Besonderheit auf, das an seiner Oberseite eine Anschlussgeometrie 12 vorhanden ist, auf die unmittelbar der Maschinenkopf der Windkraftanlage aufgesetzt werden kann. Somit stellen die einzelnen Turmsegmente 6, 7, 8 komplett vorgefertigte Baugruppen dar, die nach ihrem Transport vor Ort lediglich zusammengesetzt werden müssen. Die Windkraftanlage lässt sich auf diese Art und Weise innerhalb kürzester Zeit und mit geringem Aufwand montieren.

Wie aus der Darstellung in Figur 1 ebenfalls hervorgeht, sind die einzelnen Turmsegmente 6, 7, 8 auch bereits mit weiteren Ausrüstungsteilen für den Betrieb der Windkraftanlage ausgestattet. Nur beispielhaft ist dabei eine Treppe zum Besteigen des Turmes angedeutet.

Eine Seitenansicht der in Figur 1 dargestellten Turmsegmente 6, 7, 8 ist aus Figur 2 ersichtlich, die beispielhaft veranschaulicht, wie der Transport der Turmsegmente 6, 7, 8 auf einem Schiff 5 erfolgen kann. Die Turmsegmente 6, 7, 8 sind dabei ineinander geschachtelt und miteinander beziehungsweise gegeneinander fixiert, um die Sicherheit an Bord des Schiffes 5 zu gewährleisten. Dabei bildet das vom Querschnitt her kleinste Kopfsegment 3 das innerste Turmsegment, welches in das Zwischensegment 4 eingesetzt ist, das wiederum zusammen mit dem Kopfsegment 3 in das Fußsegment 2 mit dem größten Querschnitt eingefügt wurde. Zur Verankerung dieser ineinander geschachtelten Baugruppe mit dem Schiff 5 dient eine Fixierungseinrichtung 9, die hier beispielsweise Seile 13 und Befestigungsösen 16 umfasst. Dabei sind die Turmsegmente 6, 7, 8 mit Hilfe der Seile 13 am Deck des Schiffes 5 fixiert. Die Seile 13 werden einerseits mittels angedeuteter Schlingen 14 an den Turmsegmenten 6, 7, 8 und andererseits mit Hilfe von Schlingen 15 an den Befestigungsösen 16 am Boden des Schiffes 5 befestigt.

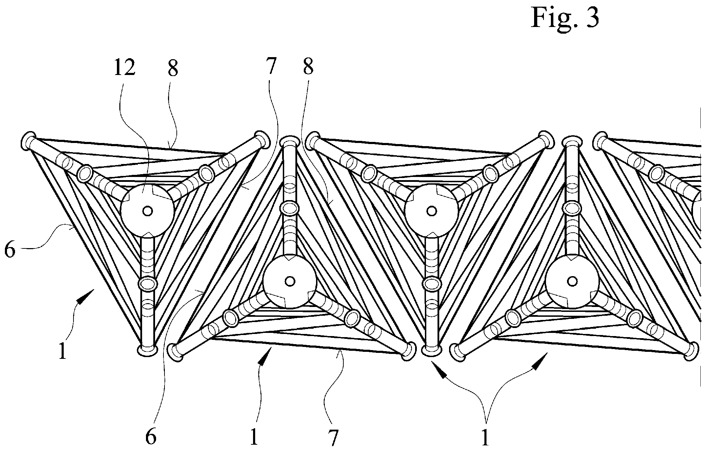

Sind mehrere Türme vorhanden, die gleichartig zu dem zuvor beschriebenen Turm ausgebildet sind, so können diese Türme nebeneinander stehend und mit je einer der Seiten 6, 7, 8 aneinander anliegend und/oder aneinander ausgerichtet auf einem Schiff 5 transportiert werden, was nachfolgend unter Bezugnahme auf Figur 3 erläutert wird, in der die Türme jeweils mit dem Bezugszeichen 1 bezeichnet sind.

Die Figur 3 veranschaulicht eine Möglichkeit, wie mehrere Türme 1 in sehr Platz sparender Weise auf dem Deck eines Schiffes 5 stehend transportiert werden können. Dabei stehen die Türme 1 dicht aneinander, und sind mit zwei einander gegenüberliegenden Seiten 6 und 7 aneinander ausgerichtet. Auf diese Weise lässt sich auch eine optimierte Fixierung der Türme 1 an Deck oder unter Deck des Schiffes 5 realisieren.

### Bezugszeichenliste

1 Turm
2 Fußsegment
3 Kopfsegment
4 Zwischensegment
5 Schiff
6 Seite
7 Seite
8 Seite
9 Fixierungseinrichtung
10 Anschlussflansch
11 Flansch
12 Anschlussgeometrie
13 Seil
14 Schlinge
15 Schlinge
16 Befestigungsöse

## Patentansprüche

1. Verfahren zum Transport und zur Montage eines oder mehrerer Windkraftanlagentürme (1), wobei der Turm oder jeder der Türme (1) als Gittermast ausgebildet ist und aus mehreren Turmsegmenten besteht, die ein Fußsegment (2) und ein Kopfsegment (3) umfassen, wobei die vorab gefertigten Turmsegmente (2, 3) des oder jedes Turmes (1) zum Transport derart ineinander angeordnet oder ineinander eingesetzt werden, dass jeweils ein nach der Endmontage des oder jedes Turmes (1) höher gelegenes Turmsegment in einem darunter angeordneten Turmsegment angeordnet oder eingesetzt ist und der oder die auf diese Weise geschachtelten Türme (1) insgesamt stehend auf einem Schiff (5) transportiert werden, **dadurch gekennzeichnet, dass** die Montage des oder jedes Turms (1) derart erfolgt, dass seine Turmsegmente (2, 3) nacheinander von außen nach innen vom Schiff (5) abgehoben und zu dem Gittermast montiert werden.

2. Verfahren nach Anspruch 1, **dadurch gekennzeichnet, dass** die Turmsegmente des oder jedes Turmes (1) wenigstens ein Zwischensegment (4) umfassen, welches zwischen dem Fußsegment (2) und dem Kopfsegment (3) angeordnet ist oder wird.

3. Verfahren nach Anspruch 1 oder 2, **dadurch gekennzeichnet, dass** die eine polygonale oder dreieckige Querschnittsgeometrie aufweisenden Türme (1) gleichzeitig und jeweils mit ihren Seiten (6, 7, 8) aneinander ausgerichtet und/oder aneinander anliegend auf dem Schiff (5) transportiert werden.

4. Verfahren nach einem der Ansprüche 1 bis 3, **dadurch gekennzeichnet, dass** die einzelnen Turmsegmente (2, 3, 4) des oder jedes Turmes (1) gegeneinander gesichert transportiert werden und auf oder in dem Schiff (5) mit Hilfe einer Fixierungseinrichtung (9) fixiert sind.

5. Verfahren nach einem der vorangehenden Ansprüche, **dadurch gekennzeichnet, dass** das ineinander Anordnen oder ineinander Einsetzen der Turmsegmente (2, 3) des oder jedes Turmes (1) derart erfolgt, dass jeweils ein nach der Endmontage des oder jedes Turmes (1) tiefer gelegenes Turmsegment über ein nach der Endmontage des Turmes (1) darüber angeordnetes Turmsegment gestülpt wird.

6. Verfahren nach einem der vorangehenden Ansprüche, **dadurch gekennzeichnet, dass** jedes Turmsegment (2, 3) eine sich zu seiner Oberseite hin verjüngende Querschnittsgeometrie aufweist.

7. Verfahren nach einem der vorangehenden Ansprüche, **dadurch gekennzeichnet, dass** der oder jeder Turm (1) mittels des Schiffes (5) zu einem Einsatz- oder Aufstellungsort transportiert und dort montiert wird.

8. Verfahren nach einem der vorangehenden Ansprüche, **dadurch gekennzeichnet, dass** der oder jeder Turm (1) an der Oberseite seines Fußsegmentes (2) sowie an der Oberseite des oder jedes seiner Zwischensegmente (4) Anschlussflansche (10) aufweist, die passgenau korrespondierend zu Flanschen (11) an der Unterseite des oder der darauf aufsetzbaren Turmsegmente ausgeführt sind, wobei der oder jeder Turm (1) durch Verbinden der Anschlussflansche (10) und der Flansche (11) aus den einzelnen Turmsegmenten zusammengebaut wird.

9. Verfahren nach Anspruch 8, **dadurch gekennzeichnet, dass** die Anschlussflansche (10) und die Flansche (11) jeweils an den Eckpunkten der polygonalen oder dreieckigen Querschnittsgeometrie des oder des jeweiligen Turmes (1) angeordnet sind.

10. Verfahren nach einem der vorangehenden Ansprüche, **dadurch gekennzeichnet, dass** das Kopfsegment (3) des oder jedes Turms (1) an seiner Oberseite eine Anschlussgeometrie (12) zur Verbindung mit dem Maschinenkopf der oder der jeweiligen Windkraftanlage aufweist.

11. Verfahren nach einem der vorangehenden Ansprüche, **dadurch gekennzeichnet, dass** der oder jeder Windkraftanlagenturm (1) insgesamt eine Stahlkonstruktion ist.

## Claims

1. Method for transporting and assembling one or more wind-turbine towers (1), wherein the tower or each of the towers (1) is designed as a lattice tower and consists of a plurality of tower segments, which comprise a foot segment (2) and a head segment (3), wherein prefabricated tower segments (2, 3) of the or each tower (1) are arranged one within the other or inserted one within the other for transportation purposes in such a manner that in each case a tower segment which is located at a higher level after the final assembly of the or each tower (1) is arranged or inserted in a tower segment arranged beneath it and the tower or towers (1) nested in this way is or are transported in an upright state overall on a ship (5), **characterised in that** the assembly of the or each tower (1) is carried out in such a manner that its tower segments (2, 3) are lifted off the ship one after the other from the outside to the inside and are assembled to form the lattice tower.

2. Method according to Claim 1, **characterised in that** the tower segments of the or each tower (1) comprise at least one intermediate segment (4), which is or will be arranged between the foot segment (2) and the head segment (3).

3. Method according to Claim 1 or 2, **characterised in that** the towers (1) having a polygonal or triangular cross-sectional geometry are at the same time and in each case aligned with each other with their sides (6, 7, 8) and/or are transported adjacent to each other on the ship (5).

4. Method according to any one of Claims 1 to 3, **characterised in that** the individual tower segments (2, 3, 4) of the or each tower (1) are transported secured with respect to each other and are fixed on or in the ship (5) by means of a fixing device (9).

5. Method according to any one of the preceding claims, **characterised in that** the arrangement one within the other or insertion one within the other of the tower segments (2, 3) of the or each tower (1) is carried out in such a manner that in each case the tower segment which is located at a lower level after the final assembly of the or each tower (1) is put over a tower segment arranged above it after the final assembly of the tower (1).

6. Method according to any one of the preceding claims, **characterised in that** each tower segment (2, 3) has a cross-sectional geometry which tapers towards its upper side.

7. Method according to any one of the preceding claims, **characterised in that** the or each tower (1) is transported by means of the ship (5) to an operation or installation site and is assembled there.

8. Method according to any one of the preceding claims, **characterised in that** the or each tower (1) has on the upper side of its foot segment (2) as well as on the upper side of the or each of its intermediate segments (4) connection flanges (10), which are executed in a precise fit corresponding to the flanges (11) on the underside of the tower segment or segments which can be placed thereon, wherein the or each tower (1) is assembled from the individual tower segments by joining the connection flanges (10) and the flanges (11).

9. Method according to Claim 8, **characterised in that** the connection flanges (10) and the flanges (11) in each case are arranged on the corner points of the polygonal or triangular cross-sectional geometry of the or the respective tower (1).

10. Method according to any one of the preceding claims, **characterised in that** the head segment (3) of the or each tower (1) has on its upper side a connection geometry (12) for the connection with the machine head of the or the respective wind turbine.

11. Method according to any one of the preceding claims, **characterised in that** the or each wind-turbine tower (1) is overall a steel construction.

## Revendications

1. Procédé de transport et de montage d'un ou de plusieurs mâts d'éolienne (1), le mât ou chacun des mâts (1) étant constitué sous la forme d'un mât en treillis et se composant de plusieurs segments de mât qui comprennent un segment de pied (2) et un segment de tête (3), les segments de mât (2, 3), fabriqués préalablement, du ou de chaque mât (1) étant disposés les uns dans les autres ou insérés les uns dans les autres pour le transport de telle sorte que respectivement un segment de mât placé plus haut après le montage final du ou de chaque mât (1) est disposé ou inséré dans un segment de mât disposé au-dessous, et la ou les mâts (1) ainsi imbriqués sont transportés globalement en position verticale sur un navire (5), **caractérisé en ce que** le montage du ou de chaque mât (1) s'effectue de telle sorte que ses segments de mât (2, 3) sont soulevés du navire (5) les uns après les autres à partir de l'extérieur vers l'intérieur et montés pour former le mât en treillis.

2. Procédé selon la revendication 1, **caractérisé en ce que** les segments de mât du ou de chaque mât (1) comprennent au moins un segment intermédiaire (4) qui est disposé ou sera disposé entre le segment de pied (2) et le segment de tête (3).

3. Procédé selon la revendication 1 ou 2, **caractérisé en ce que** les mâts (1) présentant une géométrie de section transversale polygonale ou triangulaire sont transportés simultanément et respectivement avec leurs côtés (6, 7, 8) alignés les uns avec les autres et/ou placés de façon adjacente les uns aux autres sur le navire (5).

4. Procédé selon l'une des revendications 1 à 3, **caractérisé en ce que** les différents segments de mât (2, 3, 4) du ou de chaque mât (1) sont transportés en étant bloqués les uns contre les autres et/ou sont fixés sur ou dans le navire (5) à l'aide d'un équipement de fixation (9).

5. Procédé selon l'une des revendications précédentes, **caractérisé en ce que** la disposition les uns dans les autres ou l'insertion les uns dans les autres des segments de mât (2, 3) du ou de chaque mât (1) s'effectue de telle sorte que respectivement un segment de mât placé plus bas après le montage final du ou de chaque mât (1) est engagé sur un segment de mât disposé au-dessus après le montage final du mât (1).

6. Procédé selon l'une des revendications précédentes, **caractérisé en ce que** chaque segment de mât (2, 3) présente une géométrie de section transversale qui se rétrécit en direction de son côté supérieur.

7. Procédé selon l'une des revendications précédentes, **caractérisé en ce que** le ou chaque mât (1) est transporté au moyen du navire (5) vers un lieu de mise en oeuvre ou d'implantation et y est monté.

8. Procédé selon l'une des revendications précédentes, **caractérisé en ce que**, sur le côté supérieur de son segment de pied (2) ainsi que sur le côté supérieur du ou de chacun de ses segments intermédiaires (4), le ou chaque mât (1) présente des brides de raccordement (10) qui sont réalisées de façon ajustée de manière à correspondre à des brides (11) sur le côté inférieur du ou des segments de mât pouvant être placé(s) dessus, le ou chaque mât (1) étant assemblé à partir des différents segments de mât par le raccordement des brides de raccordement (10) et des brides (11).

9. Procédé selon la revendication 8, **caractérisé en ce que** les brides de raccordement (10) et les brides (11) sont disposées respectivement au niveau des points d'angle de la géométrie de section transversale polygonale ou triangulaire du ou de chaque mât (1).

10. Procédé selon l'une des revendications précédentes, **caractérisé en ce que** le segment de tête (3) du ou de chaque mât (1) présente à son côté supérieur une géométrie de raccordement (12) destinée au raccordement à la tête de machine de l'éolienne ou de l'éolienne respective.

11. Procédé selon l'une des revendications précédentes, **caractérisé en ce que** le ou chaque mât d'éolienne (1) est globalement une construction en acier.
